# EUROPÄISCHE PATENTANMELDUNG

(11) **EP 1 834 886 A1**
(43) Veröffentlichungstag der Anmeldung: **19.09.2007**
(21) Anmeldenummer: 06005375.8
(22) Anmeldetag: 16.03.2006
(51) Int. Cl.: B65D 23/08, B65D 25/22

(54) **Etikett zum Etikettieren und Aufhängen eines Behältnisses**

(71) Anmelder: Stralfors AB, 421 22 Västra Frölunda (SE)
(72) Erfinder: Roth, Willi, 8953 Dietikon (CH)
(74) Vertreter: Wagner, Karl Heinz

(57) **Zusammenfassung**

Vorliegende Erfindung betrifft ein Etikett zum Etikettieren und Aufhängen eines Behältnisses, wobei das Etikett einen Aufhängebügel und gedruckte Informationen aufweist. Das Etikett (1) weist eine Zerreiss-Schicht (2) auf, die auf einer unteren Seite eine untere Permanentkleberschicht (3) aufweist und auf einer oberen Seite gedruckte Informationen (4) aufweist, wobei die untere Permanentkleberschicht (3) vorgesehen ist das Etikett (1) permanent an dem Behältnis anzuordnen und wobei die Zerreiss-Schicht (2) vorgesehen ist zu zerreissen falls das Etikett (1) vom Behältnis abgezogen wird. Das Etikett (1) weist ausserdem eine Kunststoff-Folie (5) auf, die durch eine obere Permantentkleberschicht (6) auf der Zerreiss-Schicht (2) angeordnet ist und vorgesehen ist das Etikett (1) und dessen Aufhängebügel (8) zu verstärken und von der transparente Teile vorgesehen sind die gedruckten Informationen (4) zu schützen.

## Beschreibung

Die Erfindung betrifft ein Etikett zum Etikettieren und Aufhängen eines Behältnisses, wobei das Etikett einen Aufhängebügel und gedruckte Informationen aufweist.

Etiketten der obengenannten Art sind z.B. durch die Dokumente DE 196 42 039 C1, DE 197 27 717 C1 und EP 1 384 674 A1 bekanntgeworden.

Die Aufgabe der vorliegenden Erfindung ist bekanntgewordene Etiketten zu verbessern mit Bezug insbesonders auf Abziehzerstörung, Hängelaststabilität und Lesbarkeit des Etiketts nach der Aufhängung.

Diese Aufgabe wird erfindungsgemäss dadurch gelöst dass das Etikett die Merkmale die hauptsächlich aus den nachfolgenden Patentansprüchen 1 und 8 aufweist.

Dadurch dass das Etikett eine Zerreiss-Schicht aufweist die beim Abziehen des Etiketts zerreist wird ersichtlich dass das Etikett aufgeklebt war und dadurch dass das Etikett eine Kunststoff-Folie aufweist wird erreicht dass dieses und dessen Aufhängebügel die erforderliche Aufhängestabilität erhält. Dadurch dass der Aufhängebügel an einem hinteren Abschnitt des Etiketts angeordnet ist der keine oder wenig gedruckte Informationen hat wird erreicht dass das die Informationen des Etiketts besonders gut ablesbar sind.

Die Erfindung wird in der folgenden Beschreibung mit Bezug auf die beiliegenden Figuren näher beschrieben. Es zeigt:

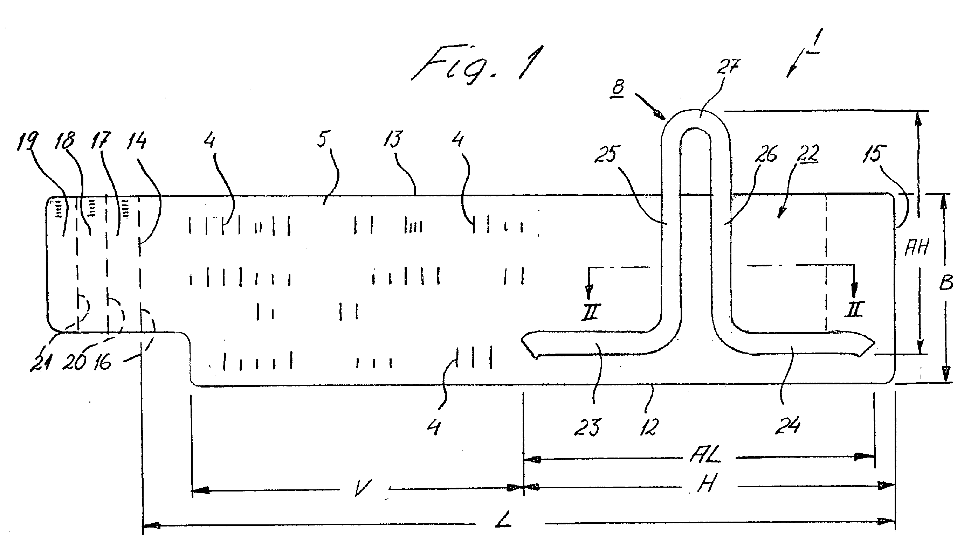

Figur 1 eine Draufsicht eines Etiketts nach einer Ausführungsform der Erfindung;

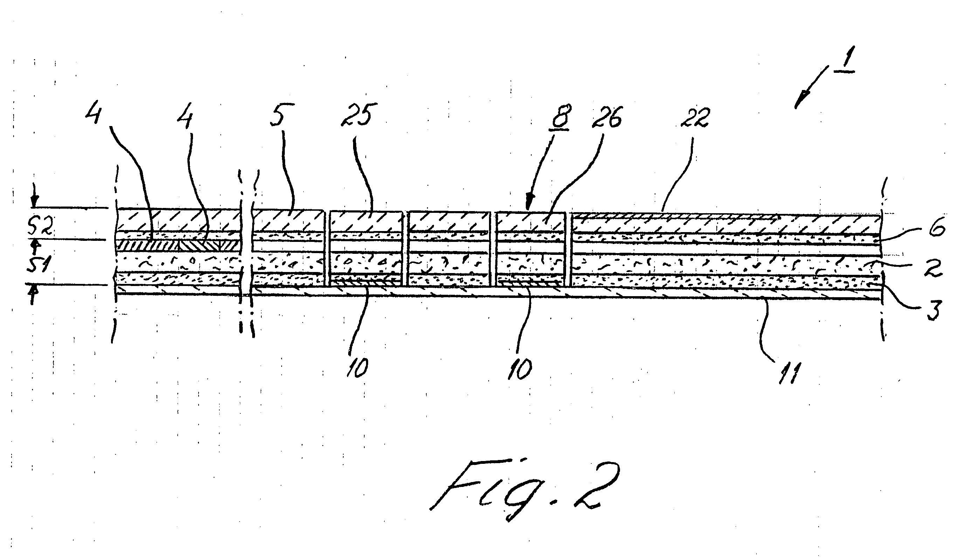

Figur 2 einen vergrösserten Schnitt von Teilen des Etiketts gemäss den Schnittlinien II-II in der Figur 1; und

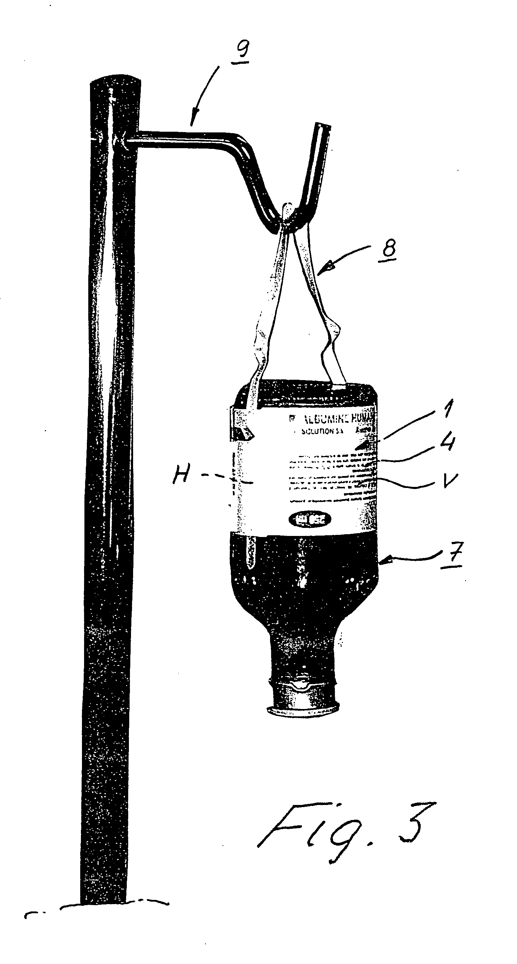

Figur 3 ein Etikett gemäss der Erfindung und ein damit aufgehängtes Behältnis.

Das in den Figuren als Beispiel des Erfindungsgegenstandes gezeigte Etikett 1 besteht aus einer Zerreiss-Schicht 2, die beispielsweise aus Papier oder anderen zerreissbaren Material besteht. Auf der unteren Seite der Zerreiss-Schicht 2 ist eine Permanentkleberschicht 3 aufgetragen und auf der oberen Seite der Zerreiss-Schicht 2 sind Informationen 4 gedruckt, die farbig und/oder schwarz sein können.

Das Etikett 1 besteht ausserdem aus einer Kunststoff-Folie 5 die beispielsweise aus Polyethylen-Terephtalat (PET) besteht. Eine obere Permanentkleberschicht 6 ist vorzugsweise an einer unteren Seite der Kunststoff-Folie 5 angeordnet und vorgesehen diese auf der Zerreiss-Schicht 2 anzukleben.

Die untere Permanentkleberschicht 3 ist angeordnet und vorgesehen das Etikett 1 auf einem Behältnis 7, beispielsweise einem Arzneimittelbehältnis, anzubringen und permanent festzuhalten.

Die Zerreiss-Schicht 2 ist angeordnet und vorgesehen zu zerreisen falls das Etikett 1 von dem Behältnis 7 abgerissen wird damit ersichtlich wird dass das Etikett 1 angeklebt war.

Die Kunststoff-Folie 5 ist angeordnet und vorgesehen das Etikett 1 und einen aus diesem mindestens teilweise ausgestanzten Aufhängebügel 8 so zu verstärken dass auch schwere Behältnisse 7 sicher auf einer Aufhängevorrichtung 9 hängen bleiben.

Auf der unteren Seite des Aufhängebügels 8 ist die untere Permanentkleberschicht 3 durch eine nichtklebende Schicht 10, beispielsweise eine Lackschicht, abgedeckt oder ist auf dieser unteren Seite keine Permanentkleberschicht 3 aufgetragen.

Das Etikett 1 kann zwei zusammengeführten Streifen S1 und S2 aufweisen. Von diesen weist ein unterer Streifen S1 die Zerreiss-Schicht 2, die untere Permanentkleberschicht 3 und die gedruckten Informationen 4 auf und ein oberer Streifen S2 weist die Kunststoff-Folie 5 und die obere Permanentkleberschicht 6 auf. Die aus diesen Streifen S1, S2 bestehenden Etiketten werden durch die untere Permanentkleberschicht 3 auf eine klebstoffabweisende obere Seite einer Trägerfolie 11 aufkaschiert und können von dieser abgezogen werden ohne dass die untere Permanentkleberschicht 3 dadurch zerstört wird. Nach dem Abziehen der Etiketten von der Trägerfolie 11 werden diese auf die Behältnisse 7 geklebt.

Das Etikett 1 hat eine erste und eine zweite längsverlaufende Kante 12, 13 die einander entgegenstehen und eine erste und eine zweite querverlaufende Kante 14, 15 die einander entgegenstehen. An der ersten querverlaufenden Kante 14 ist durch eine Perforationslinie 16 and der Kante 14 mindestens ein abtrennbarer Etikettenteil 17 angeordnet. In der gezeigten Ausführung sind zwei weitere Etikettenteile 18, 19 durch Perforationslinien 20, 21 abtrennbar an dem Etikettenteil 17 und aneinander angeordnet. Diese Etikettenteile 17, 18, 19 haben Teile der unteren Permanentkleberschicht 3 und können s.g. Belegetiketten sein die beispielsweise auf Patientenblätter geklebt werden können.

Auf der oberen Seite der Kunststoff-Folie 5 ist ein klebstoffabweisender Anbringabschnitt 22 angeordnet. Dieser liegt dicht neben solchen Teilen des Aufhängebügels 8 die quer zur Längsrichtung des Etiketts 1 angeordnet sind und wesentlich innerhalb der zweiten querverlaufenden Kante 15 liegen. Der Anbringeabschnitt 22 kann beispielsweise aus Lack bestehen der auf die Kunststoff-Folie 5 aufgetragen ist.

Das Etikett 1 hat eine solche Länge L im Verhältnis zum Umkreis des Behältnisses 7 auf dem es angeordnet werden soll, dass die Etikettenteile 17, 18, 19 - beim Anbringen des Etiketts 1 auf dem Behältnis 7 - auf dem klebstoffabweisenden Anbringeabschnitt 22 festgeklebt werden können. Da der Anbringeabschnitt 22 klebstoffabweisend ist können die Etikettenteile 17, 18, 19 davon abgezogen werden ohne dass deren Teile der unteren Permanentkleberschicht 3 zerstört werden.

Das Etikett 1 hat einen vorderen Abschnitt V und einen - im Längsrichtung des Etiketts 1 - neben diesen liegenden hinteren Abschnitt H. Diese Abschnitte V, H haben solche Längen dass sie nach Anbringen des Etiketts 1 auf den Behältnis 7 auf entgegenstehenden Seiten von diesem liegen, d.h. nach Anbringen des Etiketts 1 an dem Behältnis 7 können die Teile des Behältnisses 7 auf denen der vordere Abschnitt V des Etiketts 1 angeordnet sind als vordere Teile des Behältnisses 7 betrachtet werden.

Der vordere Abschnitt V hat wesentliche Teile der gedruckten Informationen 4 aber keine wesentlichen Teile des Aufhängebügels 8, während der hintere Abschnitt H wesentliche Teile des Aufhängebügels 8 aber keine wesentliche Teile der gedruckten Informationen 4 hat.

Der vordere Abschnitt V hat vorzugsweise eine solche Länge dass er nach dem Anbringen des Etiketts 1 an dem Behältnis 7 ungefähr die Hälfte des Behältnisses 7 umgibt.

Vorzugsweise haben solche Teile des vorderen Abschnitts V die gedruckte Informationen 4 aufweisen eine solche Länge dass sie hauptsächlich die Hälfte des Behältnisses 7 umgeben nachdem das Etikett 1 darauf angeordnet ist.

Der Aufhängebügel 8 ist wie üblich durch Stanzlinien von umgebenden Etikettenteilen getrennt, hängt aber über zwei Verbindungsabschnitten 23, 24 mit diesen zusammen.

Äussere Teile der Verbindungsabschnitte 23, 24 sind mit anderen Teilen des Etiketts 1 verbunden und die Verbindungsabschnitte 23, 24 verlaufen hauptsächlich parallel zu der ersten längsverlaufenden Kante 12 des Etiketts 1 und befinden sich in der Nähe von dieser Kante 12. Innere, einander naheliegende Teile der Verbindungsabschnitte 23, 24 gehen in zwei Seitenabschnitte 25, 26 über die hauptsächlich parallel zu einander und quer zur ersten längsverlaufenden Kante 12 verlaufen, vorzugsweise einander naheliegen, sich über die zweite längsverlaufende Kante 13 strecken und ausserhalb dieser durch einen Mittelabschnitt 27 mit einander verbunden sind.

Die quer zur ersten längsverlaufenden Kante 12 verlaufende Höhe AH (beispielsweise cirka 7 cm) des Aufhängebügels 8 ist beispielsweise grösser'als die Breite B (beispielsweise cirka 5,5 cm) des Etiketts 1 und die parallel mit der genannten Kante 12 verlaufende Länge AL (beispielsweise cirka 10,5 cm) ist beispielsweise grösser als die Höhe AH des Aufhängebügels 8. Durch diese Form und Dimensionen des Aufhängebügels 8 kann dieser eine grosse Schlaufe bilden die ohne Schwierigkeiten über einen Bodenbereich des Behältnisses 7 gestülpt werden kann.

Das Etikett 1 kann mehrere Teile als oben beschrieben aufweisen und diese Teile können aus anderen Material bestehen als oben beschrieben. Auch kann das Etikett 1 andere Formen aufweisen als oben beschrieben und auf den Zeichnungen dargestellt. Die Etiketten können für Behältnisse mit anderen Formen vorgesehen sein und der Inhalt der Behältnisse kann Arzneimittel aber auch andere Mittel sein.

## Patentansprüche

1. Etikett zum Etikettieren und Aufhängen eines Behältnisses, wobei das Etikett einen Aufhängebügel und gedruckte Informationen aufweist,
**dadurch gekennzeichnet,**
**dass** das Etikett (1) eine zerreiss-Schicht (2) aufweist die auf einer unteren Seite eine untere Permanentkleberschicht (3) aufweist und auf einer oberen Seite gedruckte Informationen (4) aufweist, wobei die untere Permanentkleberschicht (3) vorgesehen ist das Etikett (1) permanent an dem Behältnis (7) anzuordnen und wobei die zerreiss-Schicht (2) vorgesehen ist zu zerreissen falls das Etikett (1) vom Behältnis (7) abgezogen wird, und
**dass** das Etikett (1) ausserdem eine Kunststoff-Folie (5) aufweist die durch eine obere Permantentkleberschicht (6) auf der Zerreiss-Schicht (2) angeordnet ist und vorgesehen ist das Etikett (1) und dessen Aufhängebügel (8) zu verstärken und von der transparente Teile vorgesehen sind die gedruckten Informationen (4) zu schützen.

2. Etikett nach Anspruch 1, **dadurch gekennzeichnet, dass** die Kunststoff-Folie (5) aus Polyethylen-Terephtalat (PET) besteht.

3. Etikett nach Anspruch 1 oder 2, **dadurch gekennzeichnet, dass** das Etikett (1) zwei zusammengeführte Streifen (S1 und S2) aufweist, von denen
a) ein unterer Streifen (S1) die Zerreiss-Schicht (2), die untere Permanentkleberschicht (3) und die gedruckten Informationen (4) aufweist, und
b) ein oberer Streifen (S2) die Kunststoff-Folie (5) und die obere Permanentkleberschicht (6) aufweist.

4. Etikett nach einem der vorstehenden Ansprüche, **dadurch gekennzeichnet, dass** die Zerreiss-Schicht (2) aus Papiermaterial besteht oder aufweist.

5. Etikett nach einem der vorstehenden Ansprüche,
**dadurch gekennzeichnet, dass** die untere Permanentkleberschicht (3) auf der unteren Seite des Aufhängebügels (8) durch eine nichtklebende Schicht (10) abgedeckt ist oder dass die untere Seite des Aufhängebügels (8) keine untere Permanentkleberschicht aufweist.

6. Etikett nach Anspruch 5, **dadurch gekennzeichnet, dass** die nichtklebende Schicht (10) auf der Unterseite des Aufhängebügels (8) eine Lackschicht ist.

7. Etikett nach einem der vorstehenden Ansprüche,
**dadurch gekennzeichnet,**
**dass** das Etikett (1) an einer ersten querverlaufenden Kante (14) mindestens ein abtrennbarer Etikettenteil (17, 18, 19) angeordnet ist,
**dass** auf der oberen Seite der Kunststoff-Folie (5) ein klebstoffabweisender Anbringeabschnitt (22) angeordnet ist der dicht neben quer zur Längsrichtung des Etiketts (1) angeordneten Teilen des Aufhängebügels (8) und wesentlich innerhalb einer zweiten querverlaufenden Kante (15) des Etiketts (1) liegt, und
**dass** das Etikett (1) im Verhältnis zum Umkreis des Behältnisses (7) auf dem es angeordnet werden soll eine solche Länge (L) aufweist dass der mindestens eine Etikettenteil (17, 18, 19) beim Anbringen des Etiketts (1) auf dem Behältnis (7) auf dem klebstoffabweisenden Anbringeabschnitt (22) abziehbar angeordnet werden kann ohne dass eine Permanentkleberschicht (3) dieses Etikettenteils (17, 18, 19) bei diesem Abziehen zerstört wird.

8. Etikett zum Etikettieren und Aufhängen eines Behältnisses, wobei das Etikett einen Aufhängebügel und gedruckte Informationen aufweist,
**dadurch gekennzeichnet,**
**dass** das Etikett (1) einen vorderen und einen hinteren Abschnitt (V, H) aufweist die neben einander angeordnet sind,
**dass** der vordere Abschnitt (V) wesentliche Teile der gedruckten Informationen (4) aber keine wesentlichen Teile des Aufhängebügels (8) aufweist, dass der hintere Abschnitt (H) wesentliche Teile des Aufhängebügels (8) aufweist aber keine wesentlichen Teile des gedruckten Informationen (4), und
**dass** sich nach Anbringen des Etiketts (1) auf dem Behältnis (7) wesentliche Teile der vorderen und hinteren Abschnitte (V, H) auf einander entgegengesetzten Teilen des Behältnisses (7) befinden.

9. Etikett nach Anspruch 8, **dadurch gekennzeichnet, dass** gedruckte Informationen (4) aufweisende Teile des vorderen Abschnitts (V) eine solche Länge haben dass diese nach Anbringen des Etiketts (1) an dem Behältnis (7) hauptsächlich die Hälfte davon umgeben.

10. Etikett nach Anspruch 8 oder 9, **dadurch gekennzeichnet,**
**dass** der Aufhängebügel (8) hauptsächlich parallel mit einer ersten längsverlaufenden Kante (12) des Etiketts (1) verlaufende Verbindungsabschnitte (23, 24) aufweist und quer zu der ersten längsverlaufenden Kante (12) verlaufende Seitenabschnitte (25, 26) aufweist sowie einen die Seitenabschnitte (25, 26) verbindenden Mittelabschnitt (27), und
**dass** die Verbindungsabschnitte (23, 24) die Seitenabschnitte (25, 26) und der Mittelabschnitt (27) einen Aufhängebügel (8) bilden dessen Höhe (AH) quer zu der ersten längsverlaufenden Kante (12) grösser ist als die Breite (B) des Etiketts (1) und dessen Länge (AL) parallel mit der ersten längsverlaufenden Kante (12) grösser ist als dessen Höhe (AH).

11. Etikett nach Anspruch 10, **dadurch gekennzeichnet,**
**dass** äussere Teile der Verbindungsabschnitte (23, 24) mit Teilen den Etiketts (1) verbunden sind,
**dass** innere Teile der Verbindungsabschnitte (23, 24) in die Seitenabschnitte (25, 26) übergehen, und
**dass** die Seitenabschnitte (25, 26) hauptsächlich parallel mit einander verlaufen, sich über eine zweite längsverlaufende Kante (13) des Etiketts (1) strecken und ausserhalb dieser mit dem Mittelabschnitt (27) mit einander verbunden sind.

12. Etikett nach einem der Ansprüche 8-11, **dadurch gekennzeichnet, dass** die gedruckten Informationen (4) Arzneimittelinformationen sind die über den Inhalt des Behältnisses (7) informieren.
